# EUROPEAN PATENT APPLICATION

(11) **EP 3 401 192 A1**
(43) Date of publication of application: **14.11.2018**
(21) Application number: 17170090.9
(22) Date of filing: 09.05.2017
(51) Int. Cl.: B62D 25/20, B62D 65/00, B60R 13/01

(54) **CARGO SURFACE TO BE RETROFITTED TO A TRUCK OR TO A TRAILER**

(71) Applicant: Vandborg Karosserifabrik A/S, 7620 Lemvig (DK)
(72) Inventor: Gade Nielsen, Michael, 7500 Holstebro (DK); Nielsen, Søren, 7620 Lemvig (DK)
(74) Representative: Rottenberg, Annabell Simone

(57) **Abstract**

The invention relates to a cargo surface for a truck or a trailer which is intended for being retrofitted to a chassis (4) of the truck or trailer subsequent to the truck or trailer having been manufactured and delivered from the manufacturing site of the truck or trailer. The cargo surface comprises at least two individual surface units (10). Each of the cargo surface units (10) has a modular predefined length (L) being independent of the brand and type of truck or trailer onto which the cargo surface is to be retrofitted. The number of modular cargo surface units (10) to be retrofitted to the truck or trailer is determined by the length of what is to constitute the cargo surface of the truck or trailer. The number of modular, predefined length cargo surface units (10) to be retrofitted to the truck or trailer is furthermore determined by the brand and the type of truck or trailer.

## Description

### Field of invention

The present invention relates to a cargo surface for a truck or for a trailer or other vehicle. The invention relates specifically to building a cargo surface on an already manufactured truck, where the cargo surface is retrofitted to a chassis or to an already established cargo surface of a truck or of a trailer. The truck can be any size, from a pick-up truck to a lorry or a trailer of a large lorry. The invention may also relate to the cargo surface of a relatively small cargo trailer to be hauled by an ordinary car or by another vehicle smaller than a truck.

### Prior art

Cargo surfaces are known to be produced either during manufacture of the truck itself, or to be individually designed, produced and retrofitted by a sub-supplier, after manufacture of the truck itself.

For a cargo surface that is individually designed and individually produced and retrofitted by a sub-supplier, after manufacture of the truck or the trailer itself, the cargo surface is often specifically designed to the chassis of the truck or the trailer with all dimensions being individual for a certain brand and type of truck or trailer.

Alternatively, the cargo surface is a one-size-fits-all, where the cargo surface has non-individual dimensions and is secured to an already established cargo surface or to the chassis of the truck. The individually produced cargo surface is relatively expensive to produce, and the non-individually produced cargo surface does often not utilize to the utmost the chassis or the already established cargo surface of the truck.

For a cargo surface that is individually designed and individually produced and retrofitted by a sub-supplier, after manufacture of the truck or the trailer itself, it is possible to provide extra features like storage between the chassis or the already established cargo surface of the truck as manufactured and the underside of the retrofitted cargo surface. The storage may accommodate tools to be used in connection with the use of the truck or in connection with the business of the owner or driver of the truck. Such tools may be ramps for loading and unloading tools to and from the cargo surface, or it may be ladders and various hand tools. As an example, a gardener may carry a shovel, a spade, a rake and similar tools in storage between the chassis and the underside of the cargo surface and may carry a lawnmower and similar tools on the top of the cargo surface. The storage provides a safe place for the tools, when not in use, also during the driving the truck.

Access openings of the one or more storage(s) are either individually designed for a specific brand or type of truck, or are designed so that access is possible for a variety of brands and types of trucks. Again, individually designed access openings of the storages are expensive to produce, and non-individually designed access openings of the storages may not allow proper access to the storages. If openings are provided only along one side of the cargo surface, in order to be sure that a one-size, non-individually designed cargo surface fits various trucks, it may be impossible to access the part of the storage farthest from the openings.

The known cargo surfaces, especially cargo surfaces having storage, are either individually designed for a specific brand and type of truck or are one-size cargo surfaces, not designed for a specific brand or type of truck. Individually designed cargo surfaces are expensive to produce. One-size cargo surfaces, not individually designed, may be cheaper to produce, but do not utilize to the utmost the chassis or the already established cargo surface of the brand and type of truck to which the one-size, non-individually designed cargo surface is retrofitted.

Thus, there is a need for a cargo surface that can be produced and retrofitted to an already manufactured truck or trailer, and which uses the available space of the chassis or the existing cargo surface of the truck or the trailer better than the one-size cargo surfaces of the prior art,. Furthermore, there is a need for a cargo surface which is cheaper to produce than the individually designed and individually produced cargo surfaces of the prior art.

### Summary of the invention

The object of the present invention can be achieved by a cargo surface as defined in claim 1 and by a cargo surface unit having the features as defined in claim 11. Preferred embodiments are defined in the dependent sub-claims, explained in the following description and illustrated in the accompanying drawings.

The present invention has several advantages over the prior art, in that each cargo surface unit has a modular predefined length between the front edge and the rear edge of the cargo surface unit, in that said modular, pre-defined length being independent of the brand and type of truck or trailer onto which the cargo surface is to be retrofitted, in that the number of modular cargo surface units to be retrofitted to the truck or trailer is determined by the length of what is to constitute the cargo surface of the truck or trailer, and in that the number of modular, predefined length cargo surface units to be retrofitted to the truck or trailer is furthermore determined by the brand and the type of truck or trailer.

Firstly, a sub-supplier of cargo surfaces to be retrofitted to trucks or trailers may have the necessary units available in stock for retrofitting various cargo surfaces for various trucks and trailers. Retrofitting a cargo surface may be done fast, reducing the period where the truck or the trailer is not available to the truck owner or the trailer owner.

Secondly, retrofitting a cargo surface to a truck or to a trailer may be provided very fast, because the units used for building the cargo surface are known in advance in relation to the size, strength, and how to fasten a cargo surface to a chassis or to an already established cargo surface of a truck or trailer. No individual calculations, design and production are needed.

Thirdly, due to the modular length of the units for building the retrofitted cargo surface, the work to be done when retrofitting the cargo surface, the time needed for retrofitting the cargo surface, and the price for retrofitting the cargo surface are easy and fast to calculate and may be presented to a possible customer as a search facility on a website.

It is preferred that the total length of the cargo surface is a rational number multiple of the length of the modular cargo surface units, preferably a whole number multiple of the length of the modular cargo surface units. Thereby, no individual measuring and working out the cargo surface units as such are needed for retrofitting the cargo surface.

It may be an advantage that each of the modular cargo surface units consists of metal plates, said metal plates having a plane section forming the cargo surface of the modular cargo surface unit, and said metal plates having corrugated sides at a left side and a right side, said corrugated sides providing rigidity in the longitudinal direction as seen in a longitudinal direction of the truck or trailer, when each of the modular cargo surface units are retrofitted to the truck or trailer. Thereby, the corrugated sides and the rigidity, that the corrugated sides provide, may be calculated and designed in advance depending on various magnitudes of loads of the cargo surface.

It may be an advantage that each of the modular cargo surface units has a modular width between a left side and a right side of the cargo surface unit, and where the width of the modular cargo surface units is determined by the width of the cargo surface to be produced, and where the width of the cargo surface to be produced is determined by the brand and type of truck or trailer, onto which the modular cargo surface units are to be retrofitted.

Various brands and types of trucks have various widths of the chassis or of the already established cargo surface. Having cargo surface units in various widths provides the possibility of producing various cargo surfaces depending on the brand and type of truck or trailer, just like having, e.g., various sizes of tires depending on the brand and type of trucks or trailers.

In a possible and preferred embodiment of the invention, the modular cargo surface units constitute a top of a plurality of modular tool storage units to be retrofitted to a truck or trailer between the chassis of the truck or trailer and the underside of the modular cargo surface units, said at least one modular tool storage unit constituting tool storage for tool to be used by a driver or other person driving the truck or trailer, and
- where said plurality of modular tool storage units have front edges and rear edges as seen in a longitudinal direction of the truck or trailer, when retrofitted to the truck or trailer, and
- where a front edge of one modular cargo surface unit constitutes a front edge of the cargo surface of the truck or trailer, and where a rear edge of another modular cargo surface unit constitutes a rear edge of the cargo surface of the truck or trailer, and
- where the plurality of modular tool storage units are placed with front and rear edges abutting each other, where each modular cargo surface unit has a modular length between the front edge and the edge of the modular cargo surface unit, and
- where the plurality of modular tool storage units is determined by the length of the cargo surface to be produced, and
- where the plurality of modular tool storage units is determined by the brand and type of truck or trailer onto which the cargo surface is to be retrofitted.

Providing tool storage units as a supplement to the cargo surface units enhances possibilities for utilizing the cargo surface according to the invention. Tool storage is an advantage in many situations, where the cargo surface units carry cargo as such, and where the tool storage units carry tools for various purposes. The tools may be tools to be used together with the cargo carried by the cargo surface units such as ramps for loading and unloading cargo. The tools may also be ropes or other means for fastening cargo to the cargo surface. The tools may also be spare tires, wrenches and other tools in general terms to be used regularly when driving the truck or the trailer.

In a preferred embodiment, the modular tool storage units are provided with a non-closed opening or are provided with drawers or are provided with hatches. The non-closed opening or the drawers or the hatches are either directed sideways in relation to a longitudinal direction of the truck or trailer, when the modular tool storage units are retrofitted to the truck or trailer, or directed sideways in relation to a longitudinal direction of the truck or trailer, when the modular tool storage units are retrofitted to the truck or trailer.

A combination is also possible where some tool storage units have non-closed opening or are provided with drawers or with hatches directed sideways, and other modular tool storage units have non-closed opening or are provided with drawers or with hatches directed rearwards.

According to a possible embodiment of the invention, the left side edge and the right side edge of at least one of the modular cargo surface units have a recess, and where an anchoring element is embedded in each of the recesses, and where the anchoring elements are displaceable from a recessed position extending only within the recess to a projected position extending also outside the recess, and where the anchoring elements, when in the recessed position extending only within the recess, extend only below the upper plane of the cargo surface.

An anchoring element is an advantage, when there is a need for fastening cargo to the cargo surface. However, an anchoring element may be a disadvantage during loading and unloading of cargo, where the anchoring element may obstruct loading and unloading. According to the invention, the disadvantage is eliminated by the possibility of the anchoring element only extending within the recess, and not outside the recess, when the anchoring element is not in use.

The cargo surface according to the invention is primarily intended for being retrofitted and built onto a chassis of a truck or a trailer. Fastening the cargo surface to the chassis of the truck or the trailer may be provided by various fastening methods such as welding, bolting, screwing, riveting, gluing, brazing, soldering or other methods for fastening the cargo surface units to the chassis of a truck or a trailer.

Alternatively, the cargo surface according to the invention may be retrofitted and built onto an already established cargo surface of a truck, and where the cargo surface according to the invention is supported by the already established cargo surface of the truck. An already established cargo surface of a truck may be a flat cargo surface with or without dropsides extending along the cargo surface.

### Description of the Drawings

The invention will become more fully understood from the detailed description given herein below. The accompanying drawings are given by way of illustration only, and thus, they are not limitative of the present invention. In the accompanying drawings:
- Fig. 1: shows a truck suitable for being retrofitted with a cargo surface according to the invention;
- Fig. 2A-2E: shows plane views and a perspective view of a cargo surface unit according to the invention;
- Fig. 3A-3E: shows plane views and a perspective view of a tool storage unit according to the invention;
- Fig. 4A-4B: shows a first possible built-up of a cargo surface to be retrofitted to a truck.

### Detailed description of the invention

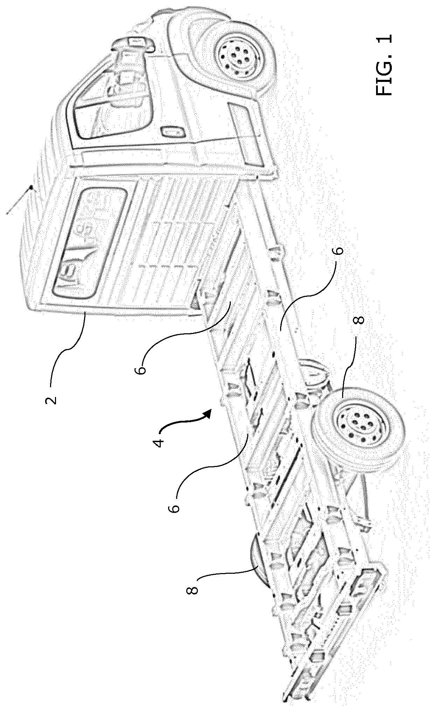

Fig. 1 shows a truck of the brand FIAT® and of the type Ducato®, suited for being retrofitted with a cargo surface according to the invention. Several other trucks, also smaller pick-up trucks and larger lorries, may form the basis for retrofitting a cargo surface according to the invention. The truck has a driver's and passenger compartment 2 at the front, and has a rear part 4 of a chassis constituted by various beams 6 extending in the longitudinal direction and in the transverse direction in relation to the longitudinal direction of the truck. The chassis 4 of the truck is supported at the ground by wheels 8. The truck as shown in Fig. 1 is how the truck is delivered from the manufacturing factory to a dealer of the truck or to a sub-supplier, where the chassis of the truck is to be retrofitted with a cargo surface or cargo storage or other cargo handling elements such as a crane and the like.

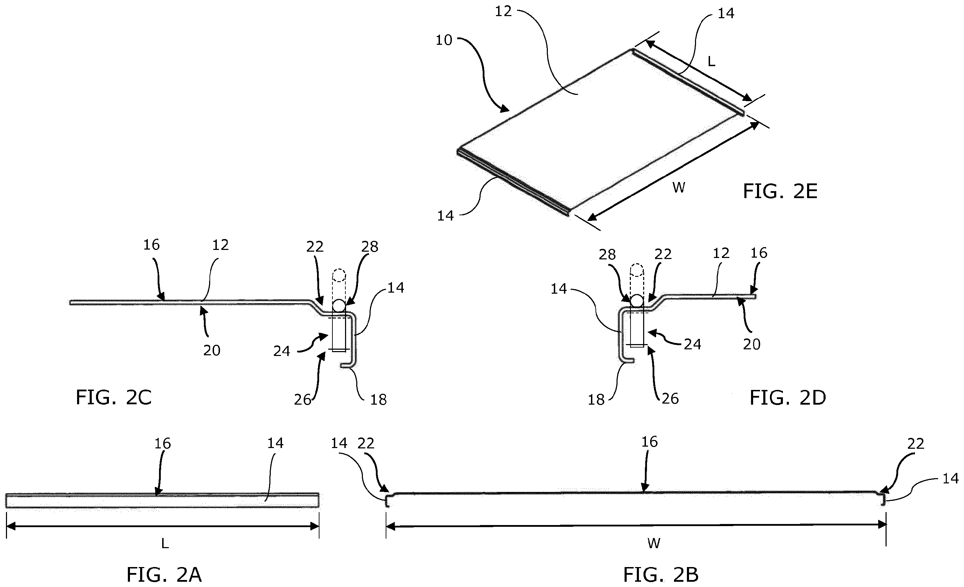

Fig. 2A-2E show a possible embodiment of a cargo surface unit 10 to be retrofitted to the chassis or to an already established cargo surface of a truck or of a trailer. The cargo surface unit is preferably made totally from metal, preferably aluminium, possibly steel. In an alternative embodiment, a plane part 12, constituting an intermediate part of the cargo surface unit, is made from wood or plastic, and corrugated parts 14 constituting lateral parts of the cargo surface unit are made from metal. A lateral surface of the corrugated parts 14 may form an abutment surface for possible drop sides (not shown), which may form part of the cargo surface. The possible drop sides may, or may not, be provided with sealing strips, which will abut the lateral sides of the corrugated parts 14, when the drop sides are in a non-dropped positioned.

The cargo surface unit has a length L of 1250 mm and a width W of approximately 2100 mm. The length L, although smaller than the width W, is called the length L because the extension of the length L of the cargo surface unit is parallel with an extension of the longitudinal direction of the truck, when the cargo surface unit is fastened to the truck or trailer. Similarly, the width W, although larger than the length L, is called the width W because the extension of the width W of the cargo surface unit is transverse to the extension of the longitudinal direction of the truck, when the cargo surface unit is fastened to the truck or trailer. The cargo surface unit, when made totally from aluminium, and having a length L of 1250 mm, has a weight of 22 kg.

A top side 16 of the plane part 12 of the cargo surface unit is intended for carrying cargo when the cargo surface unit is retrofitted to a chassis or to an already established cargo surface of a truck or of a trailer. Lower edges 18 of the corrugated parts 14 are intended for being fastened to the rear part 4 chassis of the truck (see Fig. 1). The lower edges 18 of the corrugated parts 14 may be fastened to a chassis or to an already established cargo surface of a truck or of a trailer by various methods such as welding, bolting, screwing, riveting, gluing, brazing, soldering or other methods of fastening. In an alternative embodiment, an underside 20 of the intermediate part is fastened to a chassis or to an already established cargo surface of a truck or of a trailer. In an even alternative embodiment, both the lower edges 18 of the corrugated parts 14 and the underside 20 of the intermediate part 12 are fastened to a chassis or to an already established cargo surface of a truck or of a trailer.

The corrugated parts 14 have a recces 22 section extending between the plane part 12 and the corrugated parts 14. The recess is accommodating a part of an anchoring element 24. In the embodiment shown, the anchoring element 24 constitutes a brace shaped like an inverted U. Distal ends 26 of the brace is positioned below the recces 22, and an intermediate part 28 of the brace, between the distal ends 26, is positioned above the recess 22. The distal ends 26 of the brace extend through holes (not shown) in the recess 22, but the distal ends 26 are prevented from extending through the holes.

The anchoring element 24 is intended for attaching ropes (not shown) or other fastening elements across cargo carried by the cargo surface. When the anchoring element 24 is in use, the anchoring element 24 is protruding to a position shown by a full line, where the rope or other fastening element extends around the anchoring element 24. When the attachment element is not in use, the anchoring element 24 is retracted as shown by a dotted line. When the anchoring element 24 is in the retracted position shown by the dotted line, the anchoring element 24 is fully accommodated in the recess 22. Thereby, loading and unloading of cargo to and from the plane part of the cargo surface unit is not obstructed by the anchoring element, when the anchoring element is not in use.

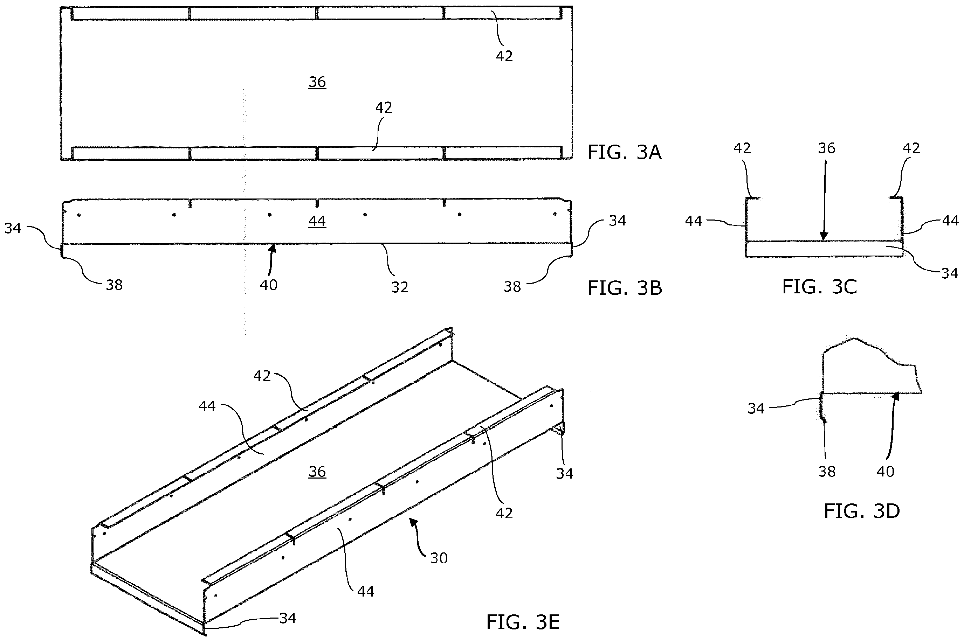

Fig. 3A-3E show an embodiment of a tool storage unit 30 according to the invention. The tool storage unit 30 is preferably made totally from metal, preferably aluminium, possibly steel. In an alternative embodiment, a plane part 32 constituting an intermediate part of the tool storage unit 30 is made from wood or plastic, and corrugated parts 34 constituting lateral parts of the tool storage unit 30 are made from metal. A lateral surface of the corrugated parts 34 may form a surface for mounting hinges for possible drop sides (not shown) or for mounting hinges for possible hatches for the storage of the tool storage unit.

The plane part 32 and the lateral part 34 of the tool storage unit 30 correspond to the plane part 12 and the lateral parts 14 of the cargo surface unit 10 in relation to the function of the plane part 12,32 and the corrugated parts 14,34 when retrofitted to a chassis or to an already established cargo surface of a truck or of a trailer.

A top side 36 of the plane part 32 of the tool storage unit 30 is intended for supporting tools (not shown) or drawers (not shown), when the tool storage unit 30 is retrofitted to a chassis or to an already established cargo surface of a truck or of a trailer. Lower edges 38 of the corrugated parts 34 are intended for being fastened to the rear part 4 chassis of the truck (see Fig. 1) or trailer or to an already established cargo surface of a truck or of a trailer.

The lower edges 38 of the corrugated parts may be fastened to the rear part of the chassis or to an already established cargo surface of a truck or of a trailer by various methods such as welding, bolting, screwing, riveting, gluing, brazing, soldering or by other methods of fastening.

In an alternative embodiment, an underside 40 of the intermediate part 32 is fastened to the rear part of the chassis of the truck (see Fig. 1) or a trailer or to an already established cargo surface of a truck or of a trailer. In an even alternative embodiment, both the lower edges 38 of the corrugated parts 34 and the underside 40 of the intermediate part 36 are fastened to the chassis of the truck (see Fig. 1) or trailer or to an already established cargo surface of a truck or of a trailer.

The tool storage unit 30 has upper flanges 42 intended for supporting a cargo surface unit (see fig. 2A-2E). The flanges 42 extend from side parts 44 of the cargo storage unit 30. A cargo surface unit is intended for being fastened to the flanges 42 of the tool storage unit 30 by various methods such as welding, bolting, screwing, riveting, gluing, brazing, soldering or other methods for fastening the cargo surface unit properly to the flanges 42 of the tool storage unit 30.

When the tool storage unit 30 is fastened to the chassis of the truck or trailer or to an already established cargo surface of a truck or of a trailer, and when a cargo surface unit 10 is fastened to the flanges 42 of the tool storage unit 30, storage is provided between the top side 36 of the plane section 32 of the tool storage unit 30 and the underside of the plane part of the cargo surface unit (see fig. 2A-2E).

The storage may be used by the driver or another person for storing tools to be used during use of the truck or to be used in the daily work of the driver or passengers of the truck. When the tool storage unit 30 is retrofitted to the chassis or an already established cargo surface of a truck or a trailer, the storage extends from the left side of the truck to the right side of the truck, and vice versa. The storage may be provided as open storage (as shown) or the storage may have hatches (not shown) for closing the storage.

Alternatively, the storage may be provided with drawers (not shown) extending all the way from the left side to the right side of the truck, or vice versa. Alternatively, drawers may extend from both the left side and partly towards the right side, and from the right side and partly towards the left side, so that the storage comprises drawers accessible from both the left side and the right side of the truck or the trailer, to which one or more tool storage units 30 are retrofitted.

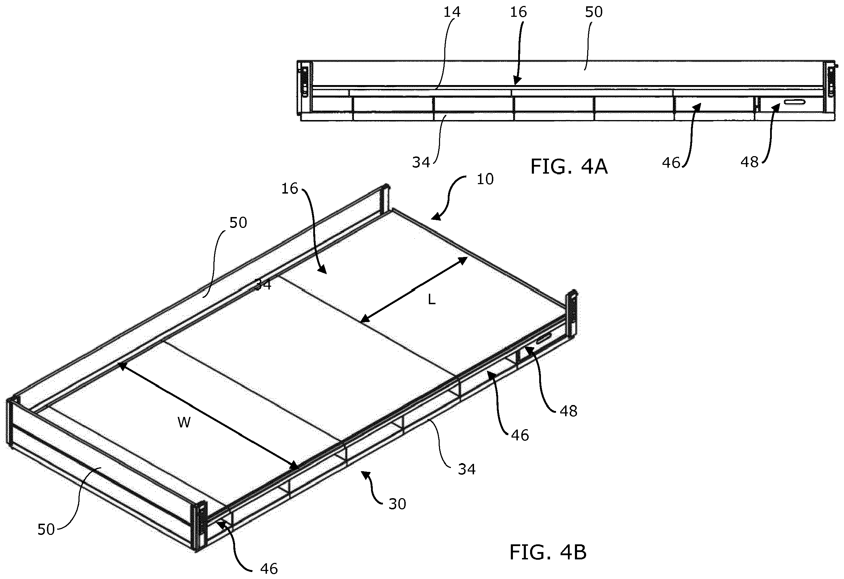

Fig. 4A-4B show a possible configuration of a cargo surface produced by a number of cargo surface units 10 and a number of tool storage units 30. In the embodiment of a cargo surface, the cargo surface has a length L of 4120 mm and a width W of 2006 mm, corresponding to the modular width W of the cargo surface units 10 and the modular width W of the tool storage units 30.

The cargo surface length L of 4120 mm is obtained by arranging three cargo surface units 10 and three tool storage units 30 having a modular length L of 1250 mm and arranging one cargo surface unit 10 and one tool storage unit 30 having a modular length L of 370 mm.

A cargo surface having another length L may be obtained by arranging another number than three and one of various length Ls of cargo surface units and modular tool storage units, respectively. As an example, a cargo surface length L of 3240 mm is obtained by arranging two cargo surface units and two tool storage units of a modular length L of 1250 mm and two cargo surface units and two tool storage units of a modular length L of 370 mm.

The arrangement of cargo surface units and tool storage unit as shown in Fig. 4A and 4B provides six storages with a modular width W of approximately 620 mm, and one storage with a modular width W of approximately 365 mm.

In the embodiment of a cargo surface shown in Fig. 4A-4B, the storage is provided as open storages which are directly accessible. However, drawers may be provided in one or more of the tool storage units 30, providing closed and extendible storages. Alternatively, hatches may be provided at the opening of one or more of the tool storage units, providing closed, but easily accessible storages. In an even alternative embodiment, a number of tool storage units may be provided as open storages, a number of tool storage units may be provided with drawers and a number of tool storage units may be provided with hatches.

Thereby, a modular arrangement is provided, where the cargo surface of the truck or trailer may be built based on individual requirements of the truck owner or truck user. As the cargo surface units and tool storage units have modular dimensions , and not dimensions specifically designed for a certain brand and type of truck, individual configuration of a cargo surface is obtained by arranging a selected number, and a selected size and a selected type (open, with drawers or with hatches) of cargo surface units and tool storage units.

Thereby, various lengths of cargo surfaces of trucks or trailers may be produced by the same modular cargo surface units and tool surface units having modular lengths. Possibly, only one modular length L is provided, possibly two modular lengths are provided, and even possibly, three or more modular lengths are provided for the cargo surface units and the tool storage units of the present invention.

In an alternative embodiment, an individual length L and/or an individual width W of the cargo surface units and/or of the tool storage units are possible in that way allowing for individual needs. Additionally, one or more of the additional technical features described and claimed, such as cargo attachments, may be provided as part of cargo surface units and/or tool storage units being produced individually for individual needs.

In the embodiment of a cargo surface shown in Fig. 4A-4B, the tool storage units have openings directed sidewards in relation to the longitudinal extension of the truck, when retrofitted to the truck. The tool storage units provide one small open side at the rear end of the cargo surface, five large open sides 46 and one drawer 48 at the front of the cargo surface.

In the embodiment of a cargo surface shown in Fig. 4A-4B, the cargo surface is provided with dropsides 50 extending along and upwards in relation to the cargo surface. Dropsides may be provided along one or more sides of the cargo surface, extending along and upwards in relation to the cargo surface, in order to prevent cargo from sliding off the cargo surface. The dropsides may be provided as add-on to the tool storage units or as add-on to the cargo surface units, being hinged to the tool storage units or to the cargo surface units. Alternatively, the dropsides are provided as part of an already established cargo surface of the truck or of the trailer, and the cargo surface units and tool storage units of the invention are positioned within the boundaries of the already established dropsides of the truck or of the trailer.

### List of reference numerals

- 2: - Driver and passenger compartment
- 4: - Chassis
- 6: - Beam
- 8: - Wheel
- 10: - Cargo surface unit
- 12: - Plane part
- 14: - Corrugated part
- 16: - Top side
- 18: - Lower edge
- 20: - Underside
- 22: - Recess
- 24: - Anchoring element
- 26: - Distal end
- 28: - Intermediate part
- 30: - Tool storage unit
- 32: - Plane part
- 34: - Corrugated part
- 36: - Top side
- 38: - Lower edge
- 40: - Underside
- 42: - Flange
- 44: - Side part
- 46: - Open side
- 48: - Drawer
- 50: - Dropside
- L: - Length
- W: - Width

## Claims

1. A cargo surface for a truck or trailer, said cargo surface is intended for being retrofitted to a chassis of the truck or trailer subsequent to the truck or trailer having been manufactured and delivered from the manufacturing site of the truck or trailer,
- where the cargo surface comprises at least two individual cargo surface units having a top side, which configures an upper plane of the cargo surface for cargo to be carried by the truck or trailer, and said at least two cargo surface units having side edges to be positioned on the chassis of the truck or trailer or on an already established cargo surface, and
- said at least two cargo surface units having front and rear edges as seen in a longitudinal direction of the truck or trailer, when retrofitted to the truck or trailer, and
- where a front edge of one cargo surface unit constitutes a front edge of the cargo surface of the truck or trailer, and where a rear edge of another cargo surface unit constitutes a rear edge of the cargo surface of the truck or trailer, and where a plurality of cargo surface units are placed with front and rear edges abutting each other,
- where each cargo surface unit has a modular, predefined length between the front edge and the edge of the cargo surface unit, said modular, predefined length being independent of the brand and type of truck or trailer onto which the cargo surface is to be retrofitted, and
- where the number of modular cargo surface units to be retrofitted to the truck or trailer is determined by the length of what is to constitute the cargo surface of the truck or trailer, and
- where the number of modular, predefined length cargo surface units to be retrofitted to the truck or trailer is furthermore determined by the brand and the type of truck or trailer.

2. A cargo surface according to claim 1, where the total length of the cargo surface is a rational number multiple of the length of the modular cargo surface units, preferably a whole number multiple of the length of the modular cargo surface units.

3. A cargo surface according to claim 1 or 2, where each of the modular cargo surface units consists of metal plates, said metal plates having a plane section forming the cargo surface of the modular cargo surface unit, and said metal having corrugated sides at a left side and a right side, said corrugated sides providing rigidity in the longitudinal direction as seen in a longitudinal direction of the truck or trailer, when each of the modular cargo surface units are retrofitted to the truck or trailer.

4. A cargo surface according to any of the preceding claims, where each of the modular cargo surface units has a modular width between a left side and a right side of the cargo surface unit, and where the width of the modular cargo surface units is determined by the width of the cargo surface to be produced, and where the width of the cargo surface to be produced is determined by the brand and type of truck or trailer, onto which the modular cargo surface units are to be retrofitted.

5. A cargo surface according to any of the preceding claims, where the modular cargo surface units constitute a top of a plurality of modular tool storage units to be retrofitted to a truck or trailer between the chassis of the truck or trailer and an underside of the modular cargo surface units, said at least one modular tool storage unit constituting tool storage for tools to be used by a driver or another person driving the truck or trailer, and
- where said plurality of modular tool storage units have front edges and rear edges as seen in a longitudinal direction of the truck or trailer, when retrofitted to the truck or trailer, and
- where a front edge of one modular cargo surface unit constitutes a front edge of the cargo surface of the truck or trailer, and where a rear edge of another modular cargo surface unit constitutes a rear edge of the cargo surface of the truck or trailer, and
- where the plurality of modular tool storage units are placed with front and rear edges abutting each other, where each modular cargo surface unit has a modular length between the front edge and the rear edge of the modular cargo surface unit, and
- where the plurality of modular tool storage units are determined by the length of the cargo surface to be produced, and
- where the plurality of modular tool storage units are determined by the brand and type of truck or trailer, onto which the cargo surface is to be retrofitted.

6. A cargo surface according to claim 5, wherein the modular tool storage units are provided with a non-closed opening or are provided with drawers or are provided with hatches, and where the non-closed opening or the drawers or the hatches are directed sideways in relation to a longitudinal direction of the truck or trailer, when the modular tool storage units are retrofitted to the truck or trailer.

7. A cargo surface according to claim 5, wherein the modular tool storage units are provided with a non-closed opening or are provided with drawers or are provided with hatches, and where the non-closed openings or the drawers or the hatches are directed sideways in relation to a longitudinal direction of the truck or trailer, when the modular tool storage units are retrofitted to the truck or trailer.

8. A cargo surface according to any of claims 5-7, where each of the modular tool storage units has a modular width between a left side edge and a right side edge of the modular tool storage unit, and where the width of the modular tool storage units is determined by the width of the cargo surface to be produced, and where the width of the cargo surface to be produced is determined by the brand and type of truck or trailer onto which the modular tool storage units are to be retrofitted.

9. A cargo surface according to any of the preceding claims, where the left side edge and the right side edge of at least one of the modular cargo surface units have a recess, and where an anchoring element is embedded in each of the recesses, and where the anchoring elements are displaceable from a recessed position extending only within the recess to a projected position extending also outside the recess, and where the anchoring elements, when in the recessed position extending only within the recess, are extending only below the upper plane of the cargo surface.

10. A cargo surface according to claim 9, where the anchoring element is a brace configured similar to an inverted U, when mounted in the recess of the at least one modular cargo surface unit, and where the brace extends between an underside and a top side of the at least one modular cargo surface unit, with the distal ends of the brace being situated below the underside of the at least one modular cargo surface unit, and with the brace extending from the distal ends through upwards holes in the recces, and with a part extending at above the top side intermediate the distal ends of the brace of the at least one modular cargo surface unit, and where the distal ends of the brace are prevented from being displaced through the holes of the recess, when the anchoring element is displaced from the recessed position to the protruding position, for cargo to be fastened by use of the anchoring elements when in the protruding position.

11. A modular cargo surface unit for providing a cargo surface according to any of the claims 1-10, said cargo surface unit having a top side featuring an upper plane of the cargo surface for cargo to be carried by the truck or trailer, and said at least two cargo surface units having side edges to be positioned on the chassis of the truck or trailer or on an already established cargo surface, and said at least two cargo surface units having front and rear edges as seen in a longitudinal direction of the truck or trailer, when retrofitted to the truck or trailer.

12. A modular tool storage unit for providing a cargo surface according to any of claim 4-10, said modular tool storage unit having front edges and rear edges as seen in a longitudinal direction of the truck or trailer, when retrofitted to the truck or trailer, and said tool storage unit having a top provided by the cargo surface unit according to claim 11.
